(19) Europäisches Patentamt
European Patent Office
Office européen des brevets

(11) **EP 1 205 384 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.[7]: **B64C 5/08**, B64C 23/06

(21) Anmeldenummer: **01810916.5**

(22) Anmeldetag: **21.09.2001**

(54) **Flügel mit Flügelgitter als Endabschnitt**

Wing grid type wing tip

Bout d'aile du type grille

(84) Benannte Vertragsstaaten:
**AT BE CH CY DE DK ES FI FR GB GR IE IT LI LU MC NL PT SE TR**

(30) Priorität: **10.11.2000 CH 21912000**

(43) Veröffentlichungstag der Anmeldung:
**15.05.2002 Patentblatt 2002/20**

(73) Patentinhaber: **LA ROCHE, Ulrich**
**CH-8053 Zürich (CH)**

(72) Erfinder:
• **La Roche, Ulrich**
**8053 Zürich (CH)**
• **La Roche, Lucas**
**8053 Zürich (CH)**

(74) Vertreter: **Frei, Alexandra Sarah**
**Frei Patentanwaltsbüro**
**Postfach 1771**
**8032 Zürich (CH)**

(56) Entgegenhaltungen:
GB-A- 196 410          GB-A- 846 322
RU-C- 2 095 281        US-A- 1 466 551
US-A- 4 671 473        US-A- 5 823 480

• AKADEMISCHEN VEREIN HÜTTE: "Des Ingenieurs Taschenbuch" 1955 , WILHELM ERNST & SOHN , BERLIN XP002256388 28. Auflage * Seite 805 - Seite 808 *

**Beschreibung**

Die Erfindung betrifft einen Flügel nach dem Oberbegriff des unabhängigen Patentanspruchs. Der Flügel weist einen Hauptflügelteil mit geschlossen umströmter Oberfläche auf, welcher Hauptflügelteil an seinem äusseren Ende einen aus einem Flügelgitter bestehenden Endabschnitt trägt. Der Flügel ist vorzugsweise der Flügel eines Flugkörpers. Es kann sich aber auch um den Flügel eines Propellers, um das Segel eines Bootes oder um das Schwert eines Bootes handeln.

Aus den Publikationen EP-0642440 und US-5823480 desselben Anmelders, wobei US-5823480 als nächsliegender Stand der Technik betrachtet wird, ist es bekannt, den Endbereich eines Flügels als Flügelgitter mit mindestens zwei parallel gestaffelten Flügelchen auszugestalten und damit den induzierten Widerstand des Gesamtflügels gegenüber einem Flügel mit gleicher Spannweite aber ohne Flügelgitter markant zu reduzieren oder mit einem Flügel mit Gitter gleiche Gleitzahlen zu erzielen wie mit einem Flügel ohne Gitter und markant grösserer Spannweite.

Um diese Widerstands-reduzierende Wirkung zu erreichen, werden gemäss den oben genannten Publikationen an das Flügelgitter für den Auslegepunkt im wesentlichen die folgenden Bedingungen gestellt:

- der Auftrieb pro Längeneinheit der Spannweite (span load) ist für das Flügelgitter gleich gross wie für den Hauptflügelteil (mindestens da, wo das Gitter am Hauptflügel befestigt ist; für eine rechteckige Auftriebsverteilung möglichst über die ganze Spannweite) und die Umströmung des Hauptflügels wird von den Flügelchen des Flügelgitters entlang der Profilsehne abschnittweise übernommen;

- die Flügelchen des Flügelgitters sind beispielsweise von hinten unten nach vorne oben gestaffelt, wobei der Staffelungswinkel (Winkel zwischen Sehne des Hauptflügelteils und Sehne des Flügelgitters) mindestens so gross ist wie der Anstellwinkel des Hauptflügels im Auslegepunkt;

- Die Flügelchen des Gitters haben eine Überlappung, die kleiner ist als 1 (Überlappung = Verhältnis zwischen Flügelchen-Sehne und Gitterteilung).

Wenn die genannten Bedingungen erfüllt sind, strömen die sich von den Flügelchen des Gitters ablösenden Wirbelflächen separat ab, wodurch die Widerstands-reduzierende Wirkung des Flügelgitters entsteht.

Für einen Flügel mit als Flügelgitter ausgestalteter Flügelspitze, für den die oben genannten Bedingungen erfüllt sind, ist die Widerstands-reduzierende Wirkung im Auslegepunkt maximal. Soll diese maximale Wirkung auch für einen anderen Anstellwinkel bzw. eine andere Geschwindigkeit erreicht werden, muss das Gitter entsprechend verstellt werden, beispielsweise durch entsprechende Einstellung der Anstellwinkel der einzelnen Flügelchen oder konstruktiv durch die Veränderung der Sehnenlängen der Flügelchen. In den eingangs genannten Publikationen wird empfohlen, das Gitter bei Änderungen des Anstellwinkels gegenüber der Anströmung als Ganzes nachzuführen, wobei die Gitterparameter unverändert bleiben.

Wenn ein Flügel mit Pfeilung, wie er für hohe Unterschallgeschwindigkeiten angewendet wird, zur Reduktion des induzierten Widerstandes mit einem endständigen Flügelgitter versehen wird, ist gemäss der oben genannten Publikationen die Pfeilung nicht nur des Hauptflügels sondern auch des Flügelgitters in Abhängigkeit des Anstellwinkels und der Profildicke an eine vorgegebene Machzahl anzupassen. Dies ergibt für den Hauptflügel und für das Flügelgitter gegebenenfalls verschiedene Pfeilwinkel. Es zeigt sich nun, dass ein für einen gleichen Pfeilwinkel ausgelegtes Gitter bei verschiedenen Pfeilwinkeln von Hauptflügel und Gitter einen vom Hauptflügelteil verschiedenen Auftrieb erzeugt und darum eine in der Regel kleinere Widerstands-reduzierende Wirkung aufweist, wenn es nicht entsprechend verändert oder entsprechend eingestellt wird.

Die Erfindung stellt sich nun die Aufgabe, einen Flügel mit einem Hauptflügelteil und einem am Hauptflügelteil endständig angeordneten, Widerstands-reduzierenden Flügelgitter zu schaffen, für welchen Flügel die Widerstands-reduzierende Wirkung des Flügelgitters bei Veränderungen des Anstellwinkels vollauf erhalten bleibt, ohne dass das Gitter für einen momentanen Anstellwinkel eingestellt oder nachgeführt werden muss.

Diese Aufgabe wird gelöst durch den Flügel, wie er in den Patentansprüchen definiert ist.

Für die Lösung der gestellten Aufgabe, müssen Hauptflügelteil und Flügelgitter des erfindungsgemässen Flügels die oben genannten Bedingungen für Überlappung und Staffelungswinkel erfüllen sowie die Bedingung des gleichen Auftriebs (CL) im Auslegepunkt. Zusätzlich müssen Hauptflügelteil und Flügelgitter aber auch einen im wesentlichen gleichen Auftriebsgradienten ($\delta CL/\delta\alpha$ oder Auftriebsänderung pro Änderung des Anstellwinkels $\alpha$) aufweisen.

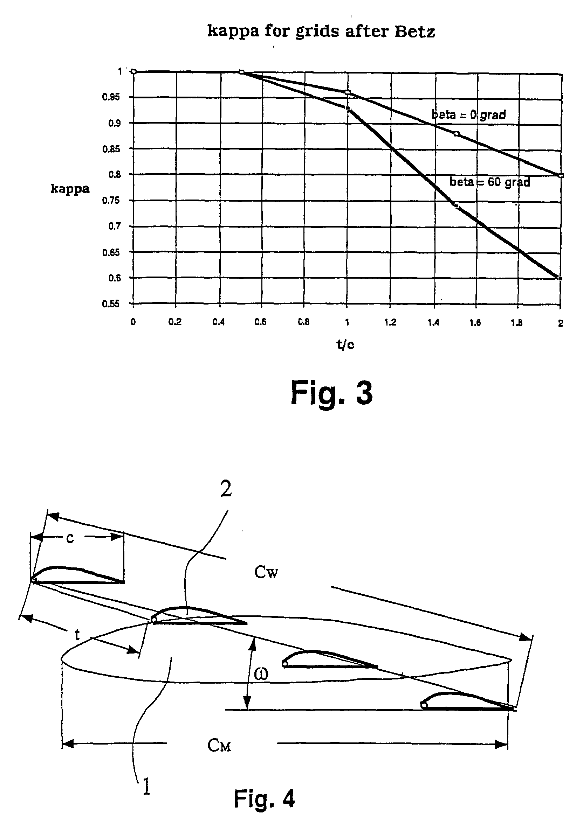

Es zeigt sich, dass die genannten Bedingungen bezüglich Auftrieb und Auftriebsgradient gleichzeitig erfüllt werden können, wenn die mittlere Nullanströmungsrichtung der Flügelchen des Flügelgitters im wesentlichen mit der Nullanströmungsrichtung des Hauptflügels übereinstimmt und wenn die Sehnenlänge des Gitters in Abhängigkeit der Überlappung der Flügelchen an die Sehnenlänge des Hauptflügelteils angepasst ist, derart, dass das Verhältnis der Sehnenlänge des Hauptflügelteils zur Sehnenlänge des Gitters im wesentlichen gleich gross ist wie der für die mittlere Überlappung der Flügelchen gültige Betz'sche Korrekturfaktor Kappa (siehe Figur 3).

Unter Übereinstimmung der Nullanströmungsrichtung von Hauptflügelteil und Flügelgitter ist zu verstehen, dass das Gitter derart am Hauptflügel angeordnet ist, dass bei einer Anstellung des Hauptflügelteils relativ zu einer Anströmung derart, dass sich kein Auftrieb ergibt (Nullanstellwinkel), auch das Gitter keinen Auftrieb erzeugt. Unter der Sehnenlänge des Gitters ist der Abstand zwischen der Vorderkante des in Anströmrichtung vordersten Flügelchens zur Hinterkante des in Anströmrichtung hintersten Flügelchens zu verstehen. Die mittlere Überlappung ist das Verhältnis von mittlerer Sehnenlänge der Flügelchen und mittlerer Gitterteilung.

Für einen Flügel, dessen Hauptflügelteil und Flügelgitter die oben genannten Bedingungen erfüllt, ist der Auftrieb für Hauptflügelteil und Flügelgitter unabhängig vom Anstellwinkel immer gleich, das heisst auch, dass das Flügelgitter seine Widerstands-reduzierende Wirkung unabhängig vom Anstellwinkel beibehält. Dies ist darauf zurückzuführen, dass in einem derartigen Flügel beide Flügelteile gleiche Ablenkungscharakteristiken haben, wodurch sich der Auftrieb bei einer Änderung des Anstellwinkels für Hauptflügel und Flügelgitter gleich ändert (gleicher Auftriebsgradient).

Die Aussage des vorigen Abschnittes gilt exakt nur für den Fall, in dem das Flügelgitter keine auftriebsabhängige tordierende Wirkung auf den Hauptflügel hat.

Für die Auslegung eines Widerstands-reduzierenden, endständigen Flügelgitters für einen vorgegebenen Hauptflügelteil mit vorgegebenem Profil und dadurch vorgegebenem Auftrieb und vorgegebenem Auftriebsgradienten wird beispielsweise der Querschnitt eines Gitters mit mindestens zwei Flügelchen und einer Überlappung < 1 derart affin vergrössert, dass die Sehnenlänge des Gitters in der oben genannten Art an die Sehnenlänge des Hauptflügelteils angepasst ist. Dieses angepasste Gitter wird am Hauptflügelteil derart angeordnet, dass der Staffelungswinkel grösser ist als der Anstellwinkel des Hauptflügelteils im Auslegepunkt und die Anstellung der Flügelchen wird für die Übereinstimmung der Nullanströmung von Hauptflügelteil und Gitter angepasst.

Zur Vermeidung einer Torsion des Flügels durch das Gitter wird das Gitter ferner vorteilhafterweise derart am Hauptflügelteil angeordnet, dass sein Auftriebsschwerpunkt auf der elastischen Torsionsachse des Hauptflügelteils liegt. Dies wird erreicht durch eine dem Auftriebsschwerpunkt des Flügelgitters entsprechendePositionierung des Gitters am Hauptflügel. Gegebenenfalls kann die Position des Auftriebsschwerpunktes des Gitters auch für eine vorgegebene Positionierung am Hauptflügelteil eingestellt werden, indem die Auftriebsverteilung im Gitter entsprechend eingestellt wird oder indem das Gitter entsprechend gepfeilt wird (nur für Machzahlen unter 0,5).

Es zeigt sich, dass auch die Anpassung des endständigen, Widerstands-reduzierenden Gitters des erfindungsgemässen Flügels an verschiedene Machzahlen bzw. an zwischen Hauptflügelteil und Flügelgitter verschiedene Pfeilungswinkel durch eine einfache affine Grössenveränderung des Gitterquerschnittes realisierbar ist. Dabei wird der Querschnitt des Flügelgitters unter Beibehaltung der relevanten Gitterparameter derart dimensioniert, dass das Verhältnis der Sehnenlänge des Hauptflügelteils zur Sehnenlänge des Flügelgitters zusätzlich zur oben genannten auf der Ablenkungscharakteristik beruhenden Anpassung um das umgekehrte Verhältnis des Cosinus der beiden Pfeilwinkel korrigiert wird. Für einen erfindungsgemässen Flügel, der gepfeilt ist, entspricht also das Verhältnis der Sehnenlänge des Hauptflügelteils zur Sehnenlänge des Gitters dem oben genannten Betz'schen Korrekturfaktor Kappa multipliziert mit dem umgekehrten Verhältnis des Cosinus der Pfeilungswinkel.

Für einen erfindungsgemässen Flügel ohne Pfeilung gilt also für das Verhältnis der Sehnenlängen von Hauptflügelteil und Flügelgitter:

$$c_M/c_W = \text{Kappa } (c/t)$$

Für einen erfindungsgemässen Flügel mit Pfeilung:

$$c_M/c_W = \text{Kappa } (c/t) \times \cos \varphi_W / \cos \varphi_M$$

wobei:

| | |
|---|---|
| $c_M$= | Sehnenlänge des Hauptflügelteils, |
| $c_W$ = | Sehnenlänge des Gitters (Abstand Vorderkante vorderstes Flügelchen zu Hinterkante hinterstes Flügelchen), |
| Kappa = | Betz'scher Korrekturfaktor, abhängig von Überlappung und Ablenkungswinkel, |
| c = | Sehnenlänge der Flügelchen |
| t = | Gitterteilung |
| c/t = | Überlappung |
| $\cos \varphi_M$= | Cosinus des Pfeilungswinkels des Hauptflügelteils, |
| $\cos \varphi_W$= | Cosinus des Pfeilungswinkels des Gitters. |

Das Verhältnis der Sehnenlänge des Hauptflügelteils zur Sehnenlänge des Flügelgitters weicht vorteilhafterweise von den in den vorgängigen Abschnitten geforderten Grössen weniger als 10% ab. Die Übereinstimmung der Nullanströmrichtung ist vorteilhafterweise besser als 2°.

Der erfindungsgemässe Flügel mit endständigem, Widerstands-reduzierendem Flügelgitter wird anhand der folgenden Figuren mehr im Detail beschrieben. Dabei zeigen:

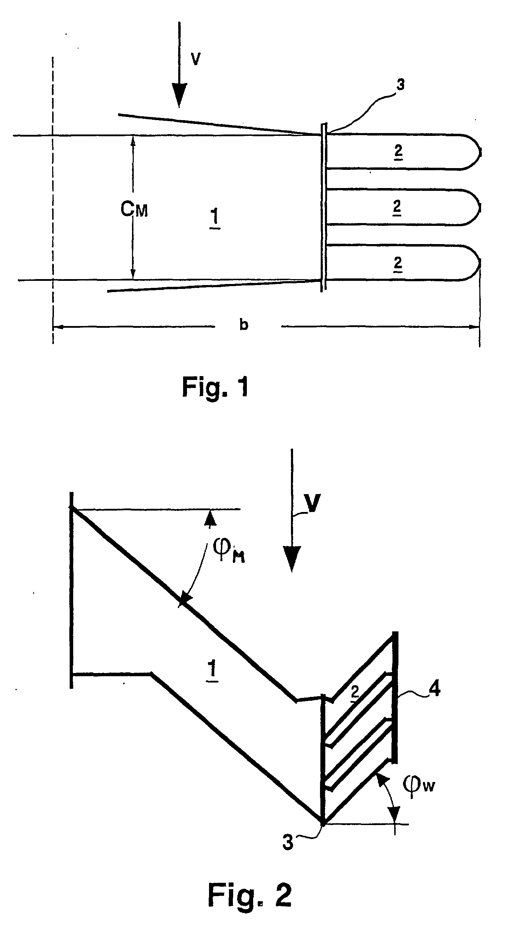

**Figur 1**      ein Beispiel eines Flügels mit Hauptflügelteil und endständigem, Widerstands-reduzierendem Flügelgitter (state of the art);

| Figur 2 | ein Beispiel eines gepfeilten Flügels mit Hauptflügelteil und endständigem, Widerstands-reduzierendem Flügelgitter, in dem zur individuellen Anpassung von Hauptflügelteil und Flügelgitter an eine vorgegebene Mach-Zahl diese verschiedene Pfeilungswinkel haben (state of the art); |
| Figur 3 | den Betz'schen Korrekturfaktor Kappa als Funktion der Überlappung der Flügelchen eines offenen Flügelgitters mit kleiner Überlappung; |
| Figuren 4 bis 8 | Querschnitte durch Hauptflügelteil und Flügelgitter von fünf beispielhaften Ausführungsformen des erfindungsgemässen Flügels; |
| Figuren 9 und 10 | weitere Massnahmen zur Reduktion des Widerstandes des erfindungsgemässen Flügels. |

**Figuren 1 und 2** zeigen aus der Vogelschau zwei Flügel gemäss der eingangs erwähnten Publikationen, die einen Hauptflügelteil 1 und ein endständiges, Widerstands-reduzierendes Flügelgitter mit mindestens zwei Flügelchen 2 (Fig. 1: drei Flügelchen, Fig. 2: drei Flügelchen) aufweist, wobei die Flügelchen 2 parallel gestaffelt angeordnet sind und die Spannweite des Hauptflügelteils 1 grösser ist als die Spannweite des Flügelgitters. Der Hauptflügelteil 1 weist an seinem äusseren Ende eine in der Ebene der Anströmungsrichtung v angeordnete Wand oder Zwischenplatte 3 auf, an der die Flügelchen 2 montiert sind. Gegebenenfalls sind die äusseren Enden der Flügelchen 2 in einem Halterahmen oder Endplatte 4 gehalten (Figur 2). Der Hauptflügelteil 1 hat an seinem äusseren Ende eine Sehnenlänge $c_M$.

Der in der Figur 1 dargestellte Flügel ist nicht gepfeilt. Der in Figur 2 gezeigte Flügel ist gepfeilt, wobei zur individuellen Anpassung von Hauptflügelteil 1 und Flügelgitter an eine spezifische Machzahl der Hauptflügelteil 1 einen Pfeilungswinkel $\varphi_M$ und die Flügelchen 2 des Gitters einen vom Pfeilungswinkel $\varphi_M$ verschiedenen Pfeilungswinkel $\varphi_W$ aufweisen. Der dargestellte Flügel ist für eine Machzahl von 0,9 ausgelegt. Die kritische Machzahl für den Hauptflügelteil 1 ist 0,7 für das Gitter 0,65. Die Spannweite des Gitters beträgt ca. 20% der gesamten Spannweite. Der Pfeilungswinkel $\varphi_M$ des Hauptflügelteils 1 ist positiv und beträgt ca. 40°, der Pfeilungswinkel $\varphi_W$ der Flügelchen 2 des Gitters ist negativ und beträgt ca. 42°. Im Beispiel ist ein negativer Pfeilungswinkel für das Flügelgitter gewählt, um den Auftriebsschwerpunkt nach vorne zu verschieben und damit die Wirkung einer rechtekkigen Auftriebsverteilung auf die Lage des Auftriebsschwerpunktes zu kompensieren (Verschiebung des Auftriebsschwerpunktes des ganzen Flügelsystems nach vorne).

**Figur 3** zeigt den Korrekturfaktor Kappa, z.B. nach A. Betz (Mitarbeiter von L. Prandtl, siehe Ing. Archiv, 1932, Seite 357) für Flügelgitter mit kleiner Überlappung als Funktion des reziproken Wertes (t/c) der Überlappung (c/t) der Flügelchen und des Ablenkungswinkels β (beta), wobei die Überlappung das Verhältnis der Sehnenlänge c der Gitterflügelchen zur Gitterteilung t ist (für c und t siehe Figur 4). Die Graphik ist veröffentlicht in: Hütte, Des Ing. Taschenbuch, 28.Auflage, Seite 808, Fig. 92.

Es ist aus der Graphik der Figur 3 ersichtlich, dass der Betz'sche Korrekturfaktor mit abnehmender Überlappung c/t und steigendem Ablenkungswinkel β abnimmt.

**Figur 4** zeigt von einer beispielhaften Ausführungsform des erfindungsgemässen Flügels den Hauptflügelteil 1 und die vier Flügelchen 2 des Widerstandsreduzierenden, endständigen Gitters im Schnitt parallel zu den Flügelsehnen. c bezeichnet die Sehnenlänge der Flügelchen und t die Gitterteilung. Dabei sind c und t derart gewählt, dass c/t (Überlappung) kleiner ist als 1. Es ist für den erfindungsgemässen Flügel keine Bedingung, dass alle Flügelchen gleiche Sehnenlängen c haben und dass die Gitterteilung eine regelmässige ist. Für unregelmässige Gitter gelten die genannten Bedingungen für die Mittelwerte von c und t.

Die Sehne $c_M$ des Hauptflügelteils 1 ist um den Betz'schen Korrekturfaktor kleiner als die Sehne $c_W$ des Gitters. Der Staffelungswinkel ω, das heisst der Winkel zwischen der Sehne $c_M$ des Hauptflügelteils 1 und der Sehne $c_W$ des Gitters, ist grösser als der Anstellwinkel des Hauptflügelteils 1 im Auslegepunkt. Wenn der Hauptflügelteil 1 und die Flügelchen 2 des Gitters gleiche Nullanstellwinkel haben, sind die Flügelchensehnen c im Mittel parallel zur Sehne $c_M$ des Hauptflügelteils.

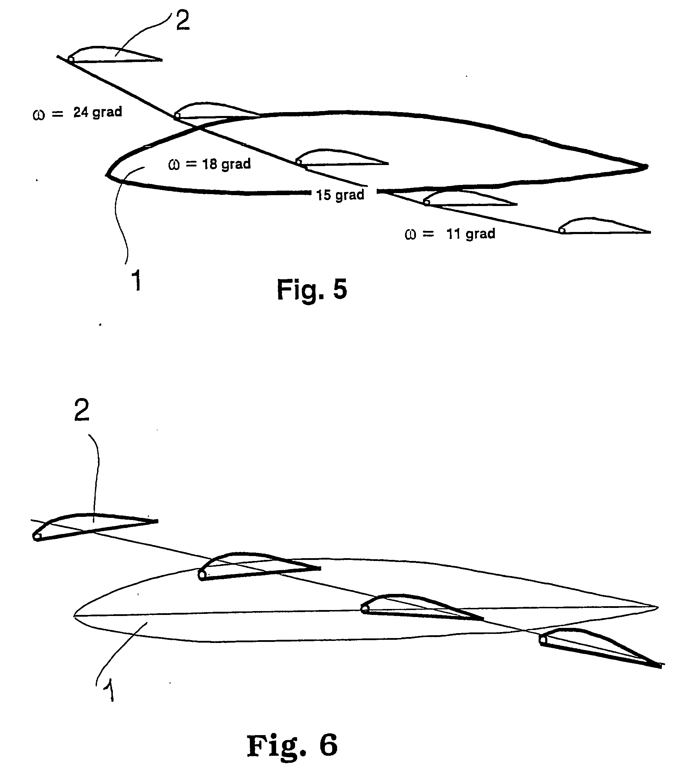

In einem regelmässigen Flügelgitter, wie es in der Figur 4 dargestellt ist, ist der Auftrieb des vordersten Flügelchens am grössten, der Auftrieb des hintersten Flügelchens am kleinsten. Es ist vorteilhaft, den Auftrieb regelmässig auf die Flügelchen zu verteilen, beispielsweise dadurch, dass die Flügelchen verschiedene Anstellwinkel haben (von vorne nach hinten steigend, siehe Figur 6). Andererseits hat das Gitter mit gleichen Anstellwinkeln der Flügelchen den Vorteil, dass die Position seines Auftriebsschwerpunktes nicht von der Geschwindigkeit abhängig ist und dadurch unabhängig von der Geschwindigkeit auf der Torsionsachse des Hauptflügelteils angeordnet werden kann.

**Figur 5** zeigt in derselben Darstellungsart wie Figur 4 eine weitere, beispielhafte Ausführungsform des erfindungsgemässen Flügels, in dem die Auftriebsverteilung auf die individuellen Flügelchen 2 durch einen von hinten nach vorne zunehmenden Staffelungswinkel ω berücksichtigt ist. Der individuelle Staffelungswinkel muss dabei grösser sein als der jeweilig wirksame Anstellwinkel des betreffenden Flügelchens.

**Figur 6** zeigt in derselben Darstellungsart wie Figur 4 eine weitere, beispielhafte Ausführungsform des erfindungsgemässen Flügels, in dem die Auftriebsverteilung über die Flügelchen 2 durch verschiedene Anstellwinkel der Flügelchen berücksichtigt ist. Der Anstellwinkel des vordersten Flügelchens ist kleiner als der Anstellwinkel des hintersten Flügelchens. Die mittleren Flügelchen haben mittlere Anstellwinkel. Die Anstellwinkel der Flügelchen sind auch hier derart, dass die Nullanströmungsrichtung des Gitters übereinstimmt mit der Nullanströmungsrichtung des Hauptflügelteils 1.

Das Flügelgitter, wie es in der Figur 6 dargestellt ist, hat einen Auftriebsschwerpunkt, dessen Position Geschwindigkeits-abhängig ist; er verschiebt sich mit wachsender Geschwindigkeit nach hinten. Wenn also der Auftriebsschwerpunkt dieses Flügelgitters für eine normale Geschwindigkeit auf der Torsionsachse des Hauptflügelteils positioniert ist, wird der Flügel bei bedeutend höheren Geschwindigkeiten trotzdem durch die Wirkung des Gitters tordiert und zwar derart, dass sich der Auftrieb reduziert, was aber durchaus wünschenswert sein kann.

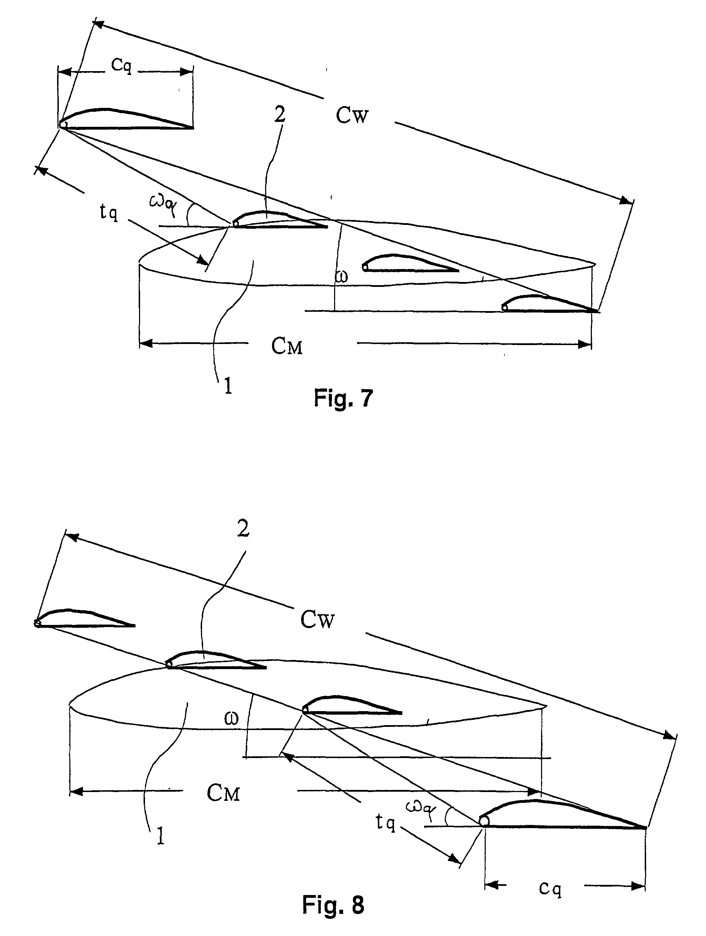

**Figuren 7 und 8** zeigen zwei weitere Ausführungsformen des erfindungsgemässen Flügels in derselben Darstellungsart wie Figuren 4 bis 6, wobei das vorderste Flügelchen des Gitters (Figur 7) oder das hinterste Flügelchen des Gitters (Figur 8) derart am Hauptflügelteil 1 angeordnet ist, dass sein Anstellungswinkel im Fluge veränderbar ist und das betreffende Flügelchen dadurch die Funktion eines Querruders übernehmen kann. Beispielhaft wird der Anstellwinkel eines Flügelchens durch Drehung um seine Achse und/oder mittles einer Wölbklappe, die Teil des Flügelchen-Profils ist, erzeugt.

Zur Sicherstellung einer vollen Querruderwirkung des betreffenden Flügelchens bei einer Beibehaltung der vollen Widerstands-reduzierenden Wirkung des Gitters werden zwei Massnahmen getroffen. Die Sehnenlänge $c_Q$ des als Querruder dienenden Flügelchens und die ihm zugeordnete Gitterteilung $t_Q$ sind grösser als die Sehnenlänge und Gitterteilung der restlichen Flügelchen, wodurch das betreffende Flügelchen mehr Auftrieb erzeugen kann. Zusätzlich ist der individuelle Staffelungswinkel $\omega_Q$ des Querruder-Flügelchens derart gross, dass auch bei maximalem Ausschlag des als Querruder dienenden Flügelchens die Bedingung für die Reduktion des induzierten Widerstandes erfüllt ist. In der praktischen Ausführung bedeutet dies eine zusätzliche Vergrösserung des individuellen Staffelungswinkels um mindestens 50% bis 100% verglichen mit dem verwendeten Staffelungswinkel ohne Querruderfunktion.

Für die Bestimmung der mittleren Nullanstömungsrichtung wird das als Querruder benützte Flügelchen in seiner neutralen Stellung betrachtet.

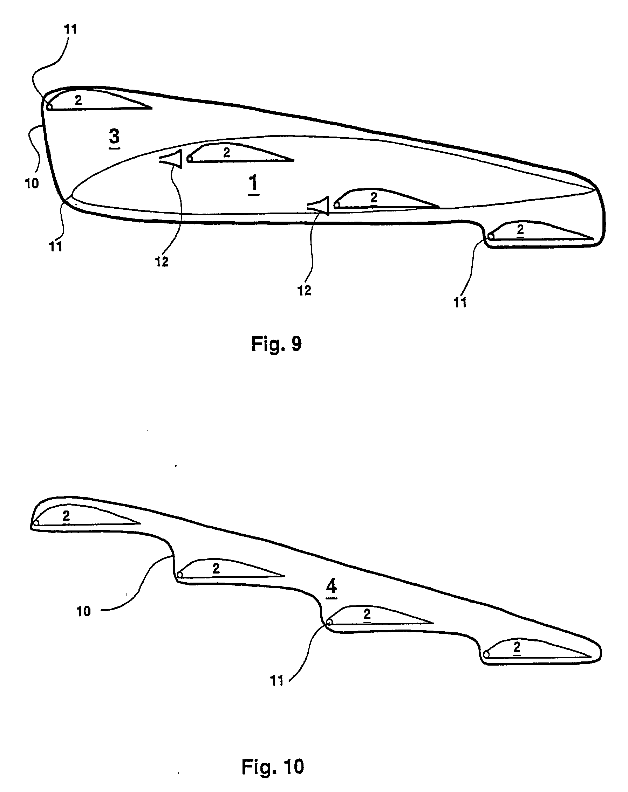

**Figuren 9 und 10** illustrieren weitere Massnahmen, die zur weiteren Widerstandsreduktion des erfindungsgemässen Flügels beitragen und insbesondere an den Platten, die das Flügelgitter begrenzen angreifen. Die genannten Platten sind bereits in den Figuren 1 und 2 dargestellt (Zwischenplatte 3 und Endplatte 4).

Durch die genannten Massnahmen wird dafür gesorgt, dass die Reduktion des induzierten Widerstandes, die durch das Flügelgitter des erfindungsgemässen Flügels gegenüber bekannten Flügeln erreicht wird, nicht teilweise oder gar ganz wettgemacht wird durch Interferenzwiderstand, der insbesondere durch die genannten Platten verursacht werden kann.

**Figur 9** zeigt eine Zwischenplatte 3 mit den Profilquerschnitten des Hauptflügelteils 1 und der fünf Flügelchen 2 eines Flügelgitters. Die Zwischenplatte 3 ist derart geformt, dass ihre vorlaufende Kante 10 möglichst wenig über die Nasenbereiche 11 der Profile vorsteht. Damit wird dafür gesorgt, dass die Grenzschicht auf der Plattenoberfläche im Nasenbereich 11 der Profile dünn ist. Für die Flügelchen 2, die im Bereiche des Hauptflügelteils 1 positioniert sind, ist die genannte Massnahme nicht möglich. Für eine Reduktion der Plattengrenzschicht im Nasenbereich dieser Flügelchen werden vorzugsweise in der Platte 3 im Nasenbereiche 11 der Profile Absaugungen 12 installiert, beispielsweise an sich bekannte NACA-inlets.

**Figur 10** zeigt eine Endplatte 4 für das auch in der Figur 10 dargestellte Flügelgitter. Auch in dieser Endplatte 4 verläuft die vorlaufende Kante 10 im wesentlichen bündig mit allen Nasenbereichen 11 der Profile der Flügelchen 2 des Flügelgitters.

**Patentansprüche**

1. Flügel mit einem geschlossen umströmten Hauptflügelteil (1) und einem endständig daran angeordneten, Widerstands-reduzierenden Flügelgitter, das mindestens zwei parallel gestaffelte Flügelchen (2) aufweist, wobei die mittlere Überlappung (c/t) der Flügelchen (2) kleiner ist als eins und wobei der mittlere Staffelungswinkel (ω) grösser ist als der Anstellwinkel des Hauptflügelteils (1) im Auslegepunkt, **dadurch gekennzeichnet, dass** die Flügelchen (2) derart ausgerichtet sind, dass die Nullanströmungsrichtung an die Flügelchen im Mittel im wesentlichen übereinstimmt mit der Nullanströmungsrichtung am Hauptflügelteil (1), und dass das Verhältnis der Sehnenlänge ($c_M$) des Hauptflügels (1) an seinem äusseren Ende zur Sehnenlänge ($c_w$) des Flügelgitters im wesentlichen gleich gross ist wie der für die mittlere Überlappung (c/t) der Flügelchen (2) gültige Betz'sche Korrekturfaktor Kappa.

2. Flügel nach Anspruch 1, **dadurch gekennzeichnet, dass** der Hauptflügelteil (1) einen Pfeilungs-

winkel ($\varphi_M$) und die Flügelchen (2) einen vom Pfeilungswinkel ($\varphi_M$) des Hauptflügelteils (1) verschiedenen Pfeilungswinkel ($\varphi_W$) aufweisen und dass das Verhältnis der Sehnenlänge ($c_M$) des Hauptflügels (1) an seinem äusseren Ende zur Sehnenlänge ($c_W$) des Flügelgitters im wesentlichen gleich gross ist wie der für die Überlappung (c/t) der Flügelchen (2) gültige Betz'sche Korrekturfaktor Kappa multipliziert mit dem Verhältnis des Cosinus des Pfeilwinkels ($\varphi_W$) der Flügelchen (2) zum Cosinus des Pfeilwinkels ($\varphi_M$) des Hauptflügels (1).

3. Flügel nach einem der Ansprüche 1 oder 2, **dadurch gekennzeichnet, dass** das Flügelgitter derart am Hauptflügelteil (1) angeordnet ist, dass der Auftriebsschwerpunkt des Flügelgitters auf der elastischen Torsionsachse des Hauptflügelteils (1) positioniert ist.

4. Flügel nach einem der Ansprüche 1 bis 3, **dadurch gekennzeichnet, dass** die Abweichungen des Verhältnisses der beiden Sehnenlängen ($c_M$, $c_W$) von den genannten Werten weniger als 10% beträgt und dass die Ungenauigkeit in der Übereinstimmung der Nullanströmungsrichtungen kleiner als 2° ist.

5. Flügel nach einem der Ansprüche 1 bis 4, **dadurch gekennzeichnet, dass** die Flügelchen (2) relativ zur Anströmrichtung von vorne oben nach hinten unten gestaffelt sind.

6. Flügel nach einem der Ansprüche 1 bis 5, **dadurch gekennzeichnet, dass** die Sehnen (c) aller Flügelchen (2) gleich lang sind, dass die Sehnen (c) aller Flügelchen parallel zueinander sind und dass das Flügelgitter eine regelmässige Gitterteilung (t) und einen regelmässigen Staffelungswinkel (ω) aufweist.

7. Flügel nach einem der Ansprüche 1 bis 5, **dadurch gekennzeichnet, dass** die Sehnen (c) aller Flügelchen (2) gleich lang sind, dass die Sehnen (c) aller Flügelchen parallel zueinander sind, dass das Flügelgitter eine regelmässige Gitterteilung (t) aufweist und dass die Flügelchen (2) von hinten nach vorne steigende Staffelungswinkel (ω) aufweisen.

8. Flügel nach einem der Ansprüche 1 bis 5, **dadurch gekennzeichnet, dass** die Sehnen (c) aller Flügelchen (2) gleich lang sind, dass die Flügelchen (2) von vorne nach hinten sich vergrössernde Anstellwinkel haben und dass das Flügelgitter eine regelmässige Gitterteilung (t) aufweist.

9. Flügel nach einem der Ansprüche 1 bis 5, **dadurch gekennzeichnet, dass** das relativ zur Anströmrichtung vorderste oder hinterste Flügelchen (2) des Flügelgitters für eine Funktion als Querruder einen im Fluge verstellbaren Anstellwinkel hat und gegenüber den anderen Flügelchen des Gitters eine vergrösserte Sehnenlänge ($c_Q$) und Gitterteilung ($t_Q$) und dass der individuelle Staffelungswinkel ($\omega_Q$) des als Querruder dienenden Flügelchens an den maximalen Anstellwinkel dieses Flügelchens angepasst ist.

10. Flügel nach einem der Ansprüche 1 bis 9, **dadurch gekennzeichnet, dass** zwischen dem Hauptflügelteil (1) und den Flügelchen (2) des Flügelgitters eine Zwischenplatte (3) vorgesehen ist.

11. Flügel nach einem der Ansprüche 1 bis 10, **dadurch gekennzeichnet, dass** die distalen Enden der Flügelchen (2) des Flügelgitters mit einer Endplatte (4) zusammengefasst sind.

12. Flügel nach einem der Ansprüche 10 oder 11, **dadurch gekennzeichnet, dass** die Zwischenplatte (3) und/oder die Endplatte (4) eine vorlaufende Kante (10) aufweist, die mit Nasenbereichen (11) der Profile des Hauptflügelteils (1) und mindestens eines Teils der Flügelchen (2) im wesentlichen bündig verläuft..

13. Flügel nach einem der Ansprüche 10 oder 11, **dadurch gekennzeichnet, dass** in der Zwischenplatte (3) und/oder in der Endplatte (4) vor den Nasenbereichen (11) von mindestens einem Teil der Flügelchen (2) Absaugungen vorgesehen sind.

## Claims

1. Wing comprising a main wing part (1) with a closed air flow around it and a drag-reducing wing grid arranged at the distal end of the main wing part (1) and comprising at least two winglets staggered in parallel (2), wherein the average overlap (c/t) of the winglets (2) is smaller than one, wherein the average stagger angle (ω) of the winglets is greater than the angle of attack of the main wing part (1) in the design point, wherein the winglets (2) are oriented in such a manner, that the zero air flow direction to the winglets on average substantially coincides with the zero air flow direction to the main wing part (1), and wherein the ratio of the chord length ($c_M$) of the main wing part (1) at its distal end to the chord length ($c_W$) of the wing grid is essentially of the same value as the correction factor Kappa according to Betz for the average overlap (c/t) of the winglets

2. Wing in accordance with claim 1, **characterized in that** the main wing part (1) has a first sweep angle ($\varphi_M$) and the winglets (2) have a second sweep angle ($\varphi_W$) differing from the first sweep angle ($\varphi_M$)

and that the ratio of the chord length ($c_M$) of the main wing (1) at its distal end to the chord length ($c_w$) of the wing grid is essentially of the same value as the correction factor Kappa according to Betz applicable for the overlap (c/t) of the winglets (2) multiplied with the ratio of the cosine of the second sweep angle ($\varphi_W$) to the cosine of the first sweep angle ($\varphi_M$).

3. Wing according to one of claims 1 or 2, **characterized in that** the wing grid is arranged on the main wing part (1) in such a manner, that the centre of lift of the wing grid is positioned on the elastic torsion axis of the main wing part (1).

4. Wing in accordance with one of claims 1 to 3, **characterized in that** the deviations of the ratio of the two chord lengths ($c_M$, $c_W$) from said value amounts to less than 10% and that the inaccuracy in the coincidence of the zero air flow directions is smaller than 2°.

5. Wing according to one of claims 1 to 4, **characterized in that** the winglets (2) are staggered from the front top to the rear bottom relative to the air flow direction.

6. Wing in accordance with one of claims 1 to 5, **characterized in that** the chords (c) of all winglets (2) are of equal length, that the chords (c) of all winglets are parallel to one another and that the wing grid comprises a regular grid spacing (t) and a regular stagger angle ($\omega$).

7. Wing according to one of claims 1 to 5, **characterized in that** the chords (c) of all winglets (2) are of equal length, that the chords (c) of all winglets are parallel to one another, that the wing grid comprises a regular grid spacing (t) and that the winglets (2) comprise stagger angles ($\omega$) increasing from the rear to the front.

8. Wing in accordance with one of claims 1 to 5, **characterized in that** the chords (c) of all winglets (2) are of equal length, that the winglets (2) comprise angles of attack, which increase from the front to the rear and that the wing grid comprises a regular grid spacing (t).

9. Wing according to one of claims 1 to 5, **characterized in that** for being able to function as aileron, a relative to the air flow direction foremost or rearmost winglet (2) of the wing grid has an angle of attack being adjustable in flight, an increased chord length ($c_Q$) and grid spacing ($t_Q$) in comparison with the other winglets of the grid and an individual stagger angle ($\omega_Q$) being matched to the maximum angle of attack of said winglet.

10. Wing in accordance with one of claims 1 to 9, **characterized in that** between the main wing part (1) and the winglets (2) of the wing grid, an intermediate plate (3) is provided.

11. Wing according to one of claims 1 to 10, **characterized in that** the distal ends of the winglets (2) of the wing grid are combined with an end plate (4).

12. Wing in accordance with one of claims 10 or 11, **characterized in that** the intermediate plate (3) and/or the end plate (4) comprises a leading edge (10), which runs essentially flush with the nose zones (11) of the profiles of the main wing part (1) and of at least a part of the winglets (2).

13. Wing according to one of claims 10 or 11, **characterized in that** suction extractors are provided in the intermediate plate (3) and/or in the end plate (4) ahead of the nose zones (11) of at least a part of the winglets (2).

## Revendications

1. Aile avec une partie d'aile principale (1) parcourue par un flux et une grille d'aubes réduisant la résistance, disposée à l'extrémité de celle-ci, qui comprend au moins deux ailettes (2) étagées parallèlement, le chevauchement moyen (c/t) des ailettes (2) étant inférieur à 1 et l'angle d'étagement moyen ($\omega$) étant supérieur à l'angle d'incidence de la partie d'aile principale (1) au point d'application, **caractérisée en ce que** les ailettes (2) sont orientées de telle manière que le sens d'écoulement nul sur les ailettes concorde en moyenne pour l'essentiel avec le sens d'écoulement nul de la partie d'aile principale (1), et **en ce que** le rapport entre la longueur de corde ($c_M$) de la partie d'aile principale (1) à son extrémité extérieure et la longueur de corde (cw) de la grille d'aubes est sensiblement égal au facteur de correction de Betz kappa valable pour le chevauchement moyen (c/t) des ailettes (2).

2. Aile selon la revendication 1, **caractérisée en ce que** la partie d'aile principale (1) présente un angle de flèche ($\varphi_M$) et les ailettes (2) un angle de flèche ($\varphi_W$) différent de l'angle de flèche ($\varphi_M$) de la partie d'aile principale (1) et **en ce que** le rapport de la longueur de corde ($c_M$) de la partie d'aile principale (1) à son extrémité extérieure à la longueur de corde (cw) de la grille d'aubes est sensiblement égal au facteur de correction de Betz kappa valable pour le chevauchement moyen (c/t) des ailettes (2) multiplié par le rapport du cosinus de l'angle de flèche ($\varphi_W$) des ailettes (2) au cosinus de l'angle de flèche ($\varphi_M$) de la partie d'aile principale (1).

**3.** Aile selon l'une des revendications 1 ou 2, **caractérisée en ce que** la grille d'aubes est disposée sur la partie d'aile principale (1) de telle manière que le centre de portance de la grille d'aubes soit positionné sur l'axe de torsion élastique de la partie d'aile principale (1).

**4.** Aile selon l'une des revendications 1 à 3, **caractérisée en ce que** les déviations du rapport des deux longueurs de corde ($c_M$, $c_W$) est inférieur à 10 % et que l'imprécision dans la concordance des sens d'écoulement nul est inférieure à 2°.

**5.** Aile selon l'une des revendications 1 à 4, **caractérisée en ce que** les ailettes (2) sont étagées de l'avant en haut vers l'arrière en bas par rapport au sens d'écoulement.

**6.** Aile selon l'une des revendications 1 à 5, **caractérisée en ce que** les cordes (c) de toutes les ailettes (2) ont la même longueur, **en ce que** les cordes (c) de toutes les ailettes sont parallèles entre elles, et **en ce que** la grille d'aubes présente un quadrillage régulier (t) et un angle d'étagement (ω) régulier.

**7.** Aile selon l'une des revendications 1 à 5, **caractérisée en ce que** les cordes (c) de toutes les ailettes (2) ont la même longueur, **en ce que** les cordes (c) de toutes les ailettes sont parallèles entre elles, et **en ce que** la grille d'aubes présente un quadrillage régulier (t) et **en ce que** les ailettes (2) présentent des angles d'étagement (ω) croissants de l'arrière vers l'avant.

**8.** Aile selon l'une des revendications 1 à 5, **caractérisée en ce que** les cordes (c) de toutes les ailettes (2) ont la même longueur, **en ce que** les ailettes (2) présentent des angles d'étagement (ω) croissants de l'avant vers l'arrière et **en ce que** la grille d'aubes présente un quadrillage régulier (t).

**9.** Aile selon l'une des revendications 1 à 5, **caractérisée en ce que** l'ailette (2) de la grille d'aubes, située le plus en avant ou en arrière par rapport au sens d'écoulement présente un angle d'incidence variable en vol pour fonctionner comme un aileron et possède une longueur de corde ($c_Q$) et un quadrillage ($t_Q$) plus grands que les autres ailettes de la grille, et **en ce que** l'angle d'étagement ($ω_Q$) individuel de l'ailette servant d'aileron est adapté à l'angle d'incidence maximal de cette ailette.

**10.** Aile selon l'une des revendications 1 à 9, **caractérisée en ce qu'**il est prévu entre la partie d'aile principale (1) et les ailettes (2) de la grille d'aubes une plaque intercalaire (3).

**11.** Aile selon l'une ou l'ensemble des revendications 1 à 10, **caractérisée en ce que** les extrémités distales des ailettes (2) de la grille d'aubes sont réunies avec une plaque d'extrémité (4).

**12.** Aile selon l'une des revendications 10 ou 11, **caractérisée en ce que** la plaque intercalaire (3) et/ou la plaque d'extrémité (4) présentent un bord avant (10) qui est sensiblement de niveau avec les zones de bec (11) des profilés de la partie d'aile principale (1) et d'au moins une partie des ailettes (2).

**13.** Aile selon l'une ou l'ensemble des revendications 10 ou 11, **caractérisée en ce qu'**il est prévu des aspirations dans la plaque intercalaire (3) et/ou la plaque d'extrémité (4) devant les zones de bec (11) d'au moins une partie des ailettes (2).

**Fig. 1**

**Fig. 2**

## kappa for grids after Betz

**Fig. 3**

**Fig. 4**

ω = 24 grad

ω = 18 grad

15 grad

ω = 11 grad

2

1

## Fig. 5

2

1

## Fig. 6

Fig. 7

Fig. 8

Fig. 9

Fig. 10